# EUROPEAN PATENT APPLICATION

(11) **EP 3 842 709 A1**
(43) Date of publication of application: **30.06.2021**
(21) Application number: 20209363.9
(22) Date of filing: 24.11.2020
(51) Int. Cl.: F25B 9/14

(54) **CRYOCOOLER, FLEXURE BEARING, AND LINEAR COMPRESSOR FOR CRYOCOOLER**

(30) Priority: 09.12.2019 JP 2019221854
(71) Applicant: Sumitomo Heavy Industries, Ltd., Tokyo 141-6025 (JP)
(72) Inventor: HIRATSUKA, Yoshikatsu, Kanagawa, 237-8555, (JP)
(74) Representative: Walcher, Armin

(57) **Abstract**

There are provided a flexure bearing (38) that improves the reliability of a linear compressor (12) and a cryocooler (10) that has such a flexure bearing (38) . The flexure bearing (38) that includes at least one leaf spring (40), which is disposed in a plane perpendicular to an oscillating direction of an oscillating body and connects the oscillating body to a support body. The leaf spring (40) includes an inner fixation portion (42) that is fixed to one of the oscillating body and the support body, an outer fixation portion (44) that is fixed to the other one of the oscillating body and the support body, an arm portion (46) that connects the inner fixation portion (42) and the outer fixation portion (44) to each other, linearly extends in an arm longitudinal direction intersecting a radial direction of the leaf spring (40) in the plane, and has an arm width in a direction perpendicular to the arm longitudinal direction in the plane, which increases from an intermediate portion (46c) of the arm portion (46) to each of the inner fixation portion (42) and the outer fixation portion (44).

## Description

### BACKGROUND OF THE INVENTION

### Field of the Invention

Certain embodiments of the present invention relate to a cryocooler, a flexure bearing, and a linear compressor for a cryocooler.

### Description of Related Art

In a cryocooler such as a pulse tube cryocooler, a Stirling cryocooler, and a Gifford-McMahon (GM) cryocooler, a linear compressor is used as a refrigerant gas source in some cases. A leaf spring structure, which is also referred to as a flexure bearing, is frequently used in the linear compressor in order to oscillatably connect a movable member to a fixing member (for example, Japanese Unexamined Patent Publication No. 2016-75217) .

### SUMMARY OF THE INVENTION

Typically, the flexure bearing described above is configured by a spiral type leaf spring member having a spring portion extending in a spiral shape. Such a leaf spring member has advantages in which the spring length can be made large, the stroke of the movable member can be made long, and resistance to repeated fatigue fracture can be improved. However, as the length of the spring portion increases, stiffness in a horizontal direction (that is, a direction perpendicular to an oscillating direction) decreases, and the movable member is likely to be displaced in the horizontal direction or to be inclined in the oscillating direction. Accordingly, the repeated contact or collision of the movable member with the fixing member can affect the long-term reliability of the compressor.

One exemplary object of an aspect of the present invention is to provide a flexure bearing that improves the reliability of a linear compressor and a cryocooler that includes such a flexure bearing.

According to an aspect of the present invention, there is provided a cryocooler including an oscillating body, a support body, a drive source that oscillates the oscillating body in an oscillating direction with respect to the support body, and a flexure bearing that includes at least one leaf spring, which is disposed in a plane perpendicular to the oscillating direction and connects the oscillating body to the support body. The leaf spring includes an inner fixation portion that is fixed to one of the oscillating body and the support body, an outer fixation portion that is fixed to the other one of the oscillating body and the support body, and an arm portion that connects the inner fixation portion and the outer fixation portion to each other, linearly extends in an arm longitudinal direction intersecting a radial direction of the leaf spring in the plane, and has an arm width in a direction perpendicular to the arm longitudinal direction in the plane, which increases from an intermediate portion of the arm portion toward each of the inner fixation portion and the outer fixation portion.

According to another aspect of the present invention, there is provided a flexure bearing mounted on a cryocooler. The flexure bearing includes at least one leaf spring that is disposed in a plane perpendicular to an oscillating direction of an oscillating body and connects the oscillating body to the support body. The leaf spring includes an inner fixation portion that is fixed to one of the oscillating body and the support body, an outer fixation portion that is fixed to the other one of the oscillating body and the support body, and an arm portion that connects the inner fixation portion and the outer fixation portion to each other, linearly extends in an arm longitudinal direction intersecting a radial direction of the leaf spring in the plane, and has an arm width in a direction perpendicular to the arm longitudinal direction in the plane, which increases from an intermediate portion of the arm portion toward each of the inner fixation portion and the outer fixation portion.

According to still another aspect of the present invention, there is provided a flexure bearing mounted on a cryocooler. The flexure bearing includes at least one leaf spring that is disposed in a plane perpendicular to an oscillating direction of an oscillating body and connects the oscillating body to the support body. The leaf spring includes an inner fixation portion that is fixed to one of the oscillating body and the support body, an outer fixation portion that is fixed to the other one of the oscillating body and the support body, and an arm portion that connects the inner fixation portion and the outer fixation portion to each other and linearly extends in an arm longitudinal direction intersecting a radial direction of the leaf spring in the plane. The flexure bearing further includes an inner spacer that is disposed to overlap the inner fixation portion and defines a first boundary line between the arm portion and the inner fixation portion on the leaf spring and an outer spacer that is disposed to overlap the outer fixation portion and defines a second boundary line between the arm portion and the outer fixation portion on the leaf spring. The first boundary line and the second boundary line extend in a tapered shape to approach each other from an inside to an outside.

According to still another aspect of the present invention, there is provided a linear compressor for a cryocooler including the flexure bearing according to any of the aspects.

Any combination of the components described above and any replacement of the components and expressions of the present invention between methods, devices, and systems are also effective as embodiments of the present invention.

In the present invention, the flexure bearing that improves the reliability of the linear compressor and the cryocooler that includes such a flexure bearing can be provided.

### BRIEF DESCRIPTION OF THE DRAWINGS

Fig. 1 schematically illustrates a cryocooler according to an embodiment.
Fig. 2 is a plan view schematically illustrating a leaf spring, which configures a flexure bearing, according to the embodiment.
Fig. 3 is a plan view schematically illustrating an inner spacer, which configures the flexure bearing, according to the embodiment.
Fig. 4 is a plan view schematically illustrating an outer spacer, which configures the flexure bearing, according to the embodiment.
Fig. 5 is a plan view schematically illustrating the flexure bearing according to the embodiment.
Fig. 6 is a schematic sectional view illustrating a section taken along A-A of Fig. 5.
Fig. 7 is a plan view schematically illustrating a spiral type leaf spring used in a flexure bearing of the related art.
Figs. 8A and 8B illustrate calculation results of stress acting on an arm portion due to oscillation of the leaf spring according to the embodiment.
Figs. 9A and 9B illustrate modification examples of the leaf spring according to the embodiment.
Fig. 10 is a view schematically illustrating another example of a linear compressor to which the flexure bearing according to the embodiment can be applied.

### DETAILED DESCRIPTION OF THE INVENTION

Hereinafter, an embodiment for executing the present invention will be described in detail with reference to the drawings. In the description and drawings, the same or equivalent components, members, and processes will be assigned with the same reference symbols, and redundant description thereof will be omitted as appropriate. The scales and shapes of illustrated parts are set for convenience in order to make the description easy to understand, and are not to be understood as limiting unless stated otherwise. The embodiment is merely an example and does not limit the scope of the present invention. All characteristics and combinations to be described in the embodiment are not necessarily essential to the invention.

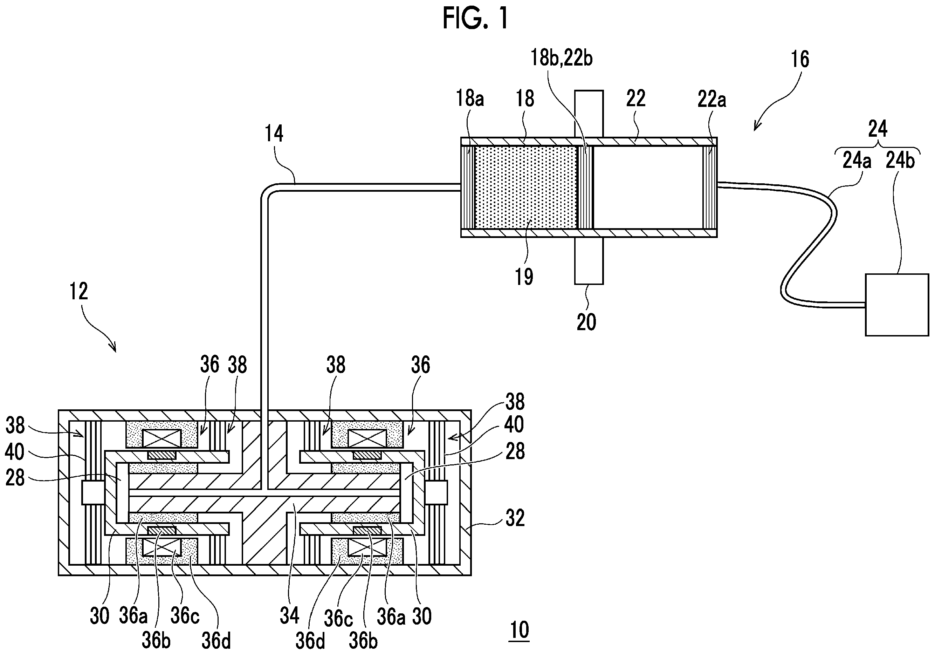

Fig. 1 schematically illustrates a cryocooler 10 according to the embodiment. The cryocooler 10 is configured as a Stirling-type pulse tube cryocooler, and includes a linear compressor 12, a connecting pipe 14, and an expander 16 which is also referred to as a cold head. The expander 16 includes a regenerator 18, a cooling stage 20, a pulse tube 22, and a phase control unit 24. The expander 16 has a so-called in-line or linear configuration in which the regenerator 18 and the pulse tube 22 are coaxially connected to each other in series.

Although the cryocooler 10 is illustrated as a single-stage pulse tube cryocooler in Fig. 1 for simplicity, it is also possible to configure the cryocooler 10 as a two-stage pulse tube cryocooler in one embodiment.

A helium gas is typically used as a refrigerant gas (also called a working gas) of the cryocooler 10. Without being limited thereto, however, it is also possible to use another appropriate gas as the refrigerant gas. The cryocooler 10 is filled with the refrigerant gas and is sealed.

The cryocooler 10 is designed such that pressure oscillation of the refrigerant gas is induced in the pulse tube 22 by an operation of the linear compressor 12 and displacement oscillation of the refrigerant gas, that is, the reciprocation of a gas piston occurs in the pulse tube 22 with an appropriate phase delay synchronized with the pressure oscillation by the workings of the phase control unit 24. The movement of the refrigerant gas, which is periodically reciprocating in an axial direction in the pulse tube 22 while maintaining a certain pressure, is frequently referred to as a "gas piston", and the term is often used to describe the behavior of the pulse tube cryocooler. When the gas piston is at or near a high-temperature end of the pulse tube 22, the refrigerant gas expands at a low-temperature end of the pulse tube 22, causing a chill.

By repeating such a refrigeration cycle (for example, specifically, a reverse Stirling cycle), the cryocooler 10 can cool the cooling stage 20 to a desired cryogenic temperature. Therefore, the cryocooler 10 can cool an object to be cooled, which is provided on the cooling stage 20 or is thermally coupled to the cooling stage 20, to a cryogenic temperature via an appropriate heat transfer member.

For example, the object to be cooled may be a detection element that detects infrared rays, submillimeter waves, X-rays, or other electromagnetic waves. Such a detection element may be a component of an observation device used in astronomical observation. The cryocooler 10 may be set to be mountable on a spacecraft, for example, an artificial satellite, together with the observation device including such an electromagnetic wave detecting element. Alternatively, the cryocooler 10 may be mounted on ground facilities including such an observation device. Alternatively, the cryocooler 10 may be mounted on a spacecraft or ground facilities together with, for example, a superconductivity device or other devices where a cryogenic temperature environment is desired.

The linear compressor 12 is configured as a so-called facing two-cylinder type linear compressor including two compressor units that are disposed coaxially to face each other. The linear compressor 12 is a movable cylinder type, and includes a cylinder 30 that is an oscillating body, a housing 32 that is a support body which accommodates the cylinder 30 and oscillatably supports the cylinder 30, a piston 34 that is accommodated in the housing 32 and is fixed to the housing 32, and a drive source, that is, a linear actuator 36 that oscillates the cylinder 30 in an oscillating direction with respect to the housing 32.

The linear compressor 12 is configured to generate pressure oscillation of the refrigerant gas in a compression space 28 by the driving of the linear actuator 36. The compression space 28 for the refrigerant gas is formed between the cylinder 30 and the piston 34, and the compression space 28 is connected to the connecting pipe 14 through a gas passage formed in the piston 34. The cylinder 30 and the piston 34 are disposed coaxially, and the piston 34 is inserted in the cylinder 30. Both of the cylinder 30 and the piston 34 are elongated and extend in the axial direction (right-and-left direction in Fig. 1). The oscillating direction of the cylinder 30 matches the axial direction of the cylinder 30 and the piston 34.

In addition, the linear compressor 12 includes a flexure bearing 38 that includes at least one leaf spring 40 disposed in a plane perpendicular to the oscillating direction (that is, the axial direction) of the cylinder 30 and connects the cylinder 30 to the housing 32. The flexure bearing 38 is also accommodated in the housing 32 together with the cylinder 30 and the piston 34. Typically, the flexure bearing 38 includes a plurality of leaf springs 40, which are laminated and disposed in the oscillating direction. Each of the leaf springs 40 is disposed parallel to the plane perpendicular to the oscillating direction. Each leaf spring 40 is flexible in the oscillating direction and is stiff in a direction perpendicular to the oscillating direction (for example, a radial direction and a circumferential direction). Thus, the cylinder 30 is elastically supported by the housing 32 via the flexure bearing 38 such that displacement in the axial direction can be caused while displacement in the radial direction and the circumferential direction is restricted. In the embodiment, two flexure bearings 38 are provided for each cylinder 30 and are attached to both ends of the cylinder 30.

The linear actuator 36 includes an inner yoke 36a, a permanent magnet 36b, a coil 36c, and an outer yoke 36d. The components of the linear actuator 36 are coaxially disposed with the piston 34 to surround the piston 34. The piston 34 is positioned on a center axis of the linear compressor 12. The inner yoke 36a, the permanent magnet 36b, the coil 36c, and the outer yoke 36d are disposed radially outward from the center axis in this order. The linear actuator 36 is accommodated in the housing 32 and is supported by the housing 32 in a fixed manner.

The linear actuator 36 is a magnet movable linear oscillation actuator. Thus, amovable part of the linear actuator 36 is configured by the permanent magnet 36b, and a stationary part of the linear actuator 36 is configured by the inner yoke 36a, the coil 36c, and the outer yoke 36d. The permanent magnet 36b is fixed to the cylinder 30, and the cylinder 30 is movable integrally with the permanent magnet 36b. The inner yoke 36a is fixed to the piston 34, and the coil 36c and the outer yoke 36d are fixed to the housing 32.

The connecting pipe 14 connects the linear compressor 12 to the expander 16. That is, the linear compressor 12 and the expander 16 are connected to each other via the connecting pipe 14 such that the refrigerant gas can flow bidirectionally between the linear compressor 12 and the expander 16. Therefore, the pressure oscillation of the refrigerant gas generated by the linear compressor 12 is transmitted to the expander 16 via the connecting pipe 14. Accordingly, the pressure oscillation can be induced in the expander 16. The connecting pipe 14 may be a flexible pipe or a stiff pipe.

The regenerator 18 includes a regenerator high-temperature end 18a and a regenerator low-temperature end 18b, and extends from the regenerator high-temperature end 18a to the regenerator low-temperature end 18b in the axial direction (right-and-left direction in Fig. 1) . The regenerator high-temperature end 18a is connected to the other end of the connecting pipe 14, and is connected to the compression space 28 of the linear compressor 12 via the connecting pipe 14. The regenerator high-temperature end 18a may be provided with a heat exchanger or another heat dissipation member, which is also called an aftercooler.

The regenerator 18 is filled with a regenerator material 19. The regenerator material 19 is, for example, a plurality of meshes (for example, a high heat conductive metal material including copper, or other metal meshes) or a laminate of mesh members. Alternatively, the regenerator material 19 may be a sintered body or a porous body. The regenerator material 19 may be a granular regenerator material. For example, the regenerator 18 has a cylindrical shape. Alternatively, the regenerator 18 may have a donut shape or other tubular shapes.

The pulse tube 22 is, for example, a tubular member having a cylindrical shape or other appropriate shape, and has an internal space that allows the refrigerant gas to be accommodated. The regenerator 18 and the phase control unit 24 are fluidly connected to each other via the pulse tube 22. The cryocooler 10 illustrated in Fig. 1 is not provided with a flow path of the refrigerant gas that circumvents the regenerator 18 and the pulse tube 22. Thus, all gas flows between the linear compressor 12 and the phase control unit 24 pass through the regenerator 18 and the pulse tube 22.

The pulse tube 22 includes a pulse tube high-temperature end 22a and a pulse tube low-temperature end 22b. The pulse tube low-temperature end 22b is connected to the regenerator low-temperature end 18b. The pulse tube low-temperature end 22b and the regenerator low-temperature end 18b communicate with each other. Accordingly, the pulse tube 22 and the regenerator 18 are fluidly connected to each other. In addition, the pulse tube low-temperature end 22b is firmly coupled to the regenerator low-temperature end 18b in terms of structure.

The cooling stage 20 is provided at a coupled part between the pulse tube low-temperature end 22b and the regenerator low-temperature end 18b such that the coupled part is surrounded. The cooling stage 20 is formed of, for example, a high heat conductive metal material including copper. The cooling stage 20 is thermally coupled to the pulse tube low-temperature end 22b and the regenerator low-temperature end 18b. As described above, a desired object to be cooled by the cryocooler 10 can be provided on the cooling stage 20.

The phase control unit 24 is provided at the pulse tube high-temperature end 22a. The phase control unit 24 includes an inertance pipe 24a connected to the pulse tube high-temperature end 22a and a buffer tank 24b fluidly connected to the pulse tube high-temperature end 22a via the inertance pipe 24a. The inertance pipe 24a may be a flexible pipe or may be a stiff pipe. Since the inertance pipe 24a is significantly long (for example, can be at least approximately 1 m or several meters) compared to an axial length of the regenerator 18 and/or the pulse tube 22, the inertance pipe may be molded into a coil shape, a meandering shape, or other curved shape.

In such a configuration, when a current is supplied to the coil 36c of the linear actuator 36 in the linear compressor 12, a magnetic field is generated around the coil 36c, and the cylinder 30 is driven together with the permanent magnet 36b by a magnetic interaction between the magnetic field and the permanent magnet 36b. That is, the linear actuator 36 oscillates the cylinder 30 in a longitudinal direction. Accordingly, the volume of the compression space 28 increases and decreases due to oscillation, and pressure oscillation of the refrigerant gas in the compression space 28 is generated. For example, an average pressure of pressure oscillation may be, for example, in a range of approximately 1 to 3 MPa in order of megapascals, a pressure amplitude may be, for example, in a range of approximately 0.5 to 1 MPa, and frequency may be, for example, in a range of approximately 50 to 60 Hz. The pressure oscillation of the refrigerant gas in the compression space 28 is transmitted to the expander 16 via the connecting pipe 14. As described above, the refrigeration cycle is configured between the linear compressor 12 and the expander 16, and the cryocooler 10 can cool the cooling stage 20 to a desired cryogenic temperature.

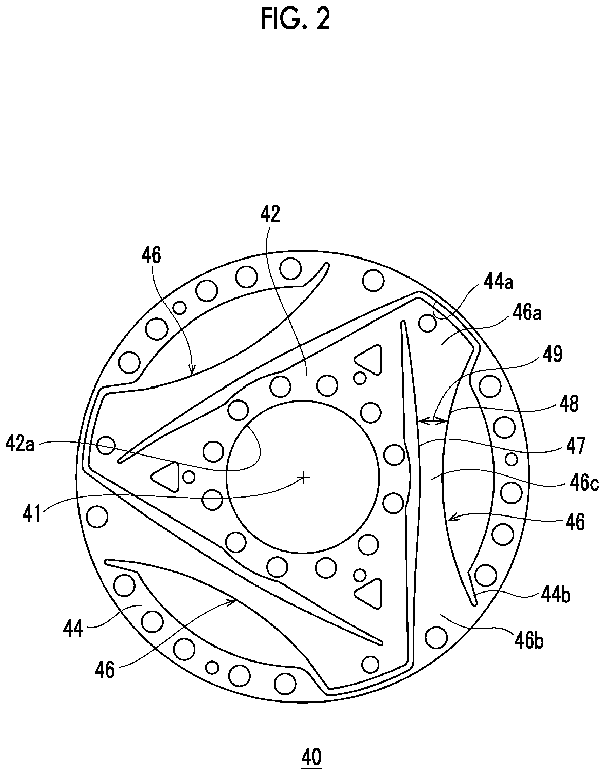

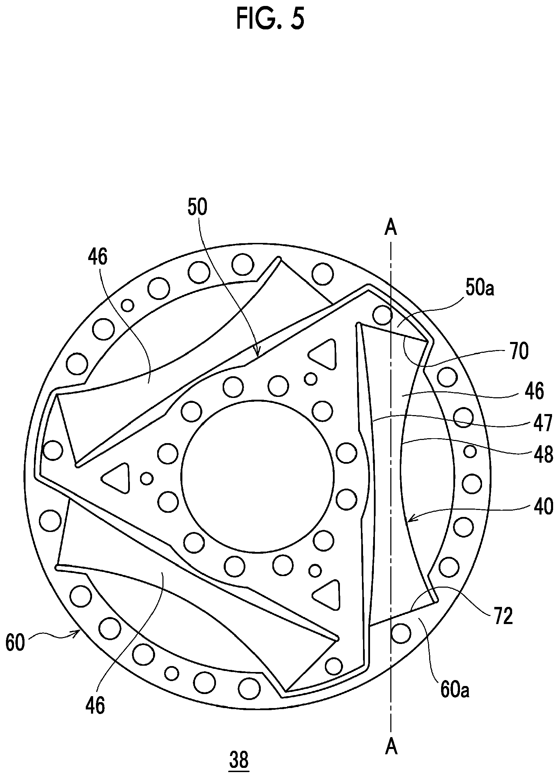

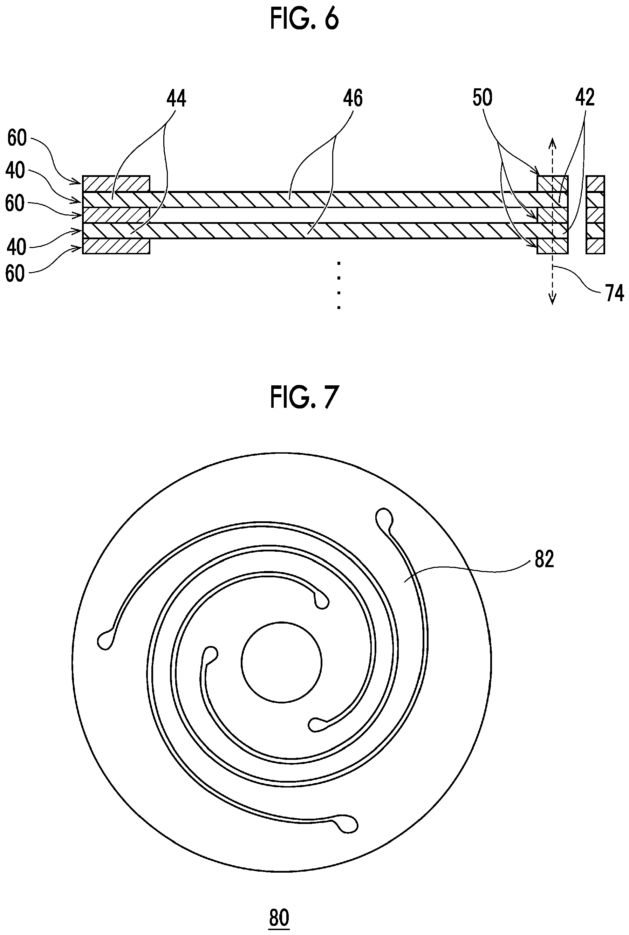

Figs. 2, 3, and 4 are plan views schematically illustrating the leaf spring 40, an inner spacer 50, and an outer spacer 60 according to the embodiment, respectively, which configure the flexure bearing 38. Fig. 5 is a plan view schematically illustrating the flexure bearing 38 according to the embodiment. Fig. 6 is a schematic sectional view illustrating a section taken along A-A of Fig. 5. As described above, since the leaf spring 40 is disposed in the plane perpendicular to the oscillating direction of the cylinder 30, the plane corresponds to the paper surface in each of Figs. 2 to 5, and the oscillating direction of the cylinder 30 is a direction perpendicular to the paper surface.

As illustrated in Fig. 2, the leaf spring 40 includes an inner fixation portion 42 fixed to one of the oscillating body and the support body, an outer fixation portion 44 fixed to the other one of the oscillating body and the support body, and a plurality of arm portions 46 that connect the inner fixation portion 42 and the outer fixation portion 44 to each other. Each of the arm portions 46 extends linearly in a direction intersecting a radial direction of the leaf spring 40 (hereinafter, also referred to as an arm longitudinal direction) in the plane perpendicular to the oscillating direction of the oscillating body.

The outer fixation portion 44 is disposed concentrically with the inner fixation portion 42 to surround the inner fixation portion 42. In the embodiment, the inner fixation portion 42 has a regular triangular shape, and the outer fixation portion 44 has an annular shape. A portion corresponding to an apex of the regular triangle of the inner fixation portion 42 is generally positioned on an inner periphery of the annulus of the outer fixation portion 44. The outer fixation portion 44 and the inner fixation portion 42 are connected to each other by the arm portions 46, but are not directly connected.

In addition, in the embodiment, the inner fixation portion 42 is fixed to the oscillating body (for example, the cylinder 30 illustrated in Fig. 1), and the outer fixation portion 44 is fixed to the support body (for example, the housing 32) . The outer fixation portion 44 is provided with a large number of circular small holes for fastening in the circumferential direction, fastening members such as a bolt are inserted therein, and the outer fixation portion 44 is fixed to the support body. A circular opening portion 42a is formed in a center portion of the inner fixation portion 42, a large number of circular small holes for fastening are provided along a circumference of the circular opening portion 42a, fastening members such as a bolt are inserted therein, and the inner fixation portion 42 is fixed to the oscillating body.

One leaf spring 40 is provided with three arm portions 46, and the arm portions 46 are disposed in a regular triangular shape. Due to the elastic deformation of the arm portions 46, axial relative displacement between the inner fixation portion 42 and the outer fixation portion 44, that is, the axial oscillation of the oscillating body is allowed. Since the leaf spring 40 has a regular triangular disposition of the arm portions 46, the stiffness of the leaf spring 40 in the horizontal direction can be high compared to a spiral type leaf spring (refer to Fig. 7) of the related art. The horizontal displacement of the oscillating body with respect to the support body and the inclination with respect to the axial direction can be suppressed, and contact or collision between the oscillating body and the support body during operation is also suppressed. The leaf spring 40 contributes to improving the long-term reliability of the linear compressor 12 and the cryocooler 10.

Each of the arm portions 46 extends along each side of the regular triangle of the inner fixation portion 42, and the arm longitudinal direction of the arm portion 46 is parallel to the corresponding side. An inner end 46a of each arm portion 46 is connected to the corresponding apex of the inner fixation portion 42, and an outer end 46b of the arm portion 46 is connected to the outer fixation portion 44 near the apex adjacent to the apex of the inner fixation portion 42 to which the inner end 46a is connected. The inner end 46a and the outer end 46b of the arm portion 46 are generally equidistant from a center 41 of the leaf spring 40 (radial positions are the same).

An arm width 49 in a direction perpendicular to the arm longitudinal direction in the plane perpendicular to the oscillating direction of the oscillating body increases from an intermediate portion 46c of the arm portion 46 toward each of the inner fixation portion 42 and the outer fixation portion 44. That is, the arm width 49 decreases from the inner fixation portion 42 toward the intermediate portion 46c of the arm portion 46, and increases from the intermediate portion 46c of the arm portion 46 toward the outer fixation portion 44. By making the arm width 49 relatively large at the inner end 46a and the outer end 46b of the arm portion 46 as described above, stress concentration caused by twist that can occur at both ends of the arm portion 46 when the leaf spring 40 is elastically deformed by the oscillation of the oscillating body can be alleviated.

The arm portion 46 has a shape symmetrical with respect to the intermediate portion 46c, and the arm width 49 is equal at the inner end 46a and the outer end 46b of the arm portion 46. In a case where the arm width 49 is excessively small at the intermediate portion 46c of the arm portion 46, the strength of the arm portion 46 can be low. Therefore, in order to secure the strength of the arm portion 46, the arm width 49 at the intermediate portion 46c of the arm portion 46 may be larger than, for example, half of the arm width 49 at the inner end 46a (or the outer end 46b) of the arm portion 46.

The arm portion 46 includes an inner arm line 47 and an outer arm line 48, which extend from the inner fixation portion 42 to the outer fixation portion 44 and define the arm width 49. The inner arm line 47 and the outer arm line 48 form the contour of the arm portion 46, the inner arm line 47 is positioned on an inner fixation portion 42 side, and the outer arm line 48 is positioned on an outer fixation portion 44 side.

The inner arm line 47 is curved outward in a recessed shape, and the outer arm line 48 is curved inward in a recessed shape. The arm width 49 gradually decreases from the inner fixation portion 42 toward the intermediate portion 46c of the arm portion 46, and gradually increases from the intermediate portion 46c of the arm portion 46 toward the outer fixation portion 44. Gently changing the arm width 49 in the arm longitudinal direction in this manner also leads to alleviation of stress concentration at both ends of the arm portion 46.

The inner arm line 47 and the outer arm line 48 are, for example, arcuate curves. Both of the diameter of a circle forming the inner arm line 47 and the diameter of a circle forming the outer arm line 48 are longer than the length of the arm portion 46. For this reason, the inner arm line 47 and the outer arm line 48 form a relatively gentle arc. Since the arm portion 46 has a bilateral symmetrical shape as described above, the center of the circle forming the inner arm line 47, the center of the circle forming the outer arm line 48, and the center 41 of the leaf spring 40 are on a straight line.

In the embodiment, the outer arm line 48 is strongly curved compared to the inner arm line 47. The radius of the circle forming the outer arm line 48 is smaller than the radius of the circle forming the inner arm line 47. As will be described later, by curving the outer arm line 48 more strongly in this manner, stress concentration at both ends of the arm portion 46 can be alleviated compared to a case where the outer arm line is not strongly curved.

A notch portion 44a that receives an end portion (that is, the inner end 46a) of the arm portion 46, which is connected to the inner fixation portion 42, is formed in the outer fixation portion 44. The notch portion 44a is positioned near the apex of the inner fixation portion 42. While an outer periphery of the outer fixation portion 44 is circular, an inner periphery of the outer fixation portion 44 is recessed toward the outer periphery due to the notch portion 44a (that is, the width of the outer fixation portion 44 in the radial direction is narrow compared to other parts at the notch portion 44a). As the notch portion 44a receives the inner end 46a of the arm portion 46, the length of the arm portion 46 (dimension in the arm longitudinal direction) can be made large compared to a case where the outer fixation portion 44 has no notch portion 44a and the inner periphery of the outer fixation portion 44 is concentric with the outer periphery. As the arm portion 46 is longer, a relative displacement amount between the inner fixation portion 42 and the outer fixation portion 44 can be made large, and accordingly, the stroke of the cylinder 30 illustrated in Fig. 1 can be made large.

In addition, a slit 44b is formed between the outer fixation portion 44 and the outer end 46b of the arm portion 46. Similar to the notch portion 44a, the slit 44b is recessed toward the outer periphery from the inner periphery of the outer fixation portion 44, and the width of the outer fixation portion 44 in the radial direction is small compared to other parts at the slit 44b. With respect to the outer end 46b of the arm portion 46, the slit 44b is on one side of the leaf spring 40 in the circumferential direction, and the notch portion 44a that receives the inner end 46a of the adjacent arm portion 46 is on the other side. By providing the slit 44b, the length of the arm portion 46 can be made large compared to a case where there is no slit 44b.

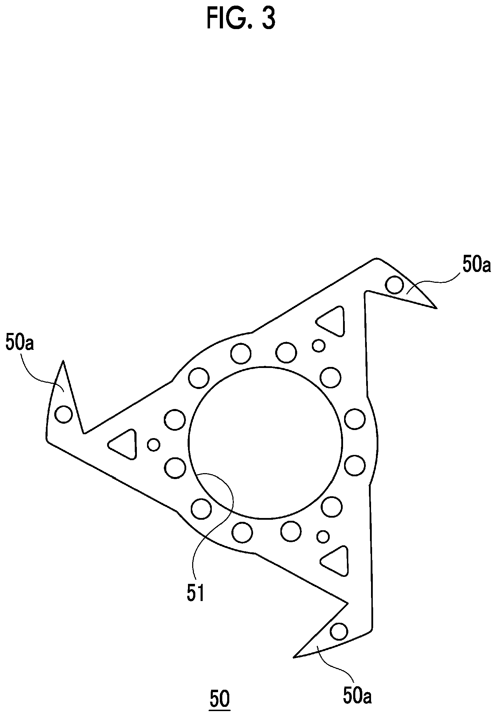

The inner spacer 50 illustrated in Fig. 3 is disposed to overlap the inner fixation portion 42 of the leaf spring 40. The inner spacer 50 has the same shape as the inner fixation portion 42 of the leaf spring 40. Thus, the inner spacer 50 also has a regular triangular shape, and has an inner arm support portion 50a that overlaps the inner end 46a of the arm portion 46 at the apex of the regular triangle. The inner spacer 50 does not overlap other parts of the arm portion 46. The inner spacer 50 does not overlap the outer fixation portion 44 of the leaf spring 40, either. A circular opening portion 51 is formed in a center portion of the inner spacer 50, a large number of circular small holes for fastening are provided along a circumference of the circular opening portion 51, fastening members such as a bolt are inserted therein, and the inner spacer 50 is fastened together with the inner fixation portion 42 and is fixed to the oscillating body.

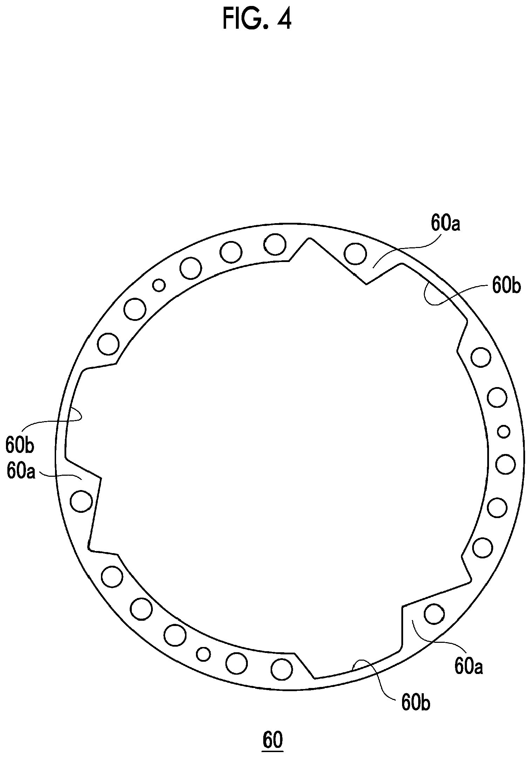

The outer spacer 60 illustrated in Fig. 4 is disposed to overlap the outer fixation portion 44 of the leaf spring 40. The outer spacer 60 has the same shape as the outer fixation portion 44 of the leaf spring 40. Thus, the outer spacer 60 also has an annular shape, and is provided with an outer arm support portion 60a and a notch portion 60b. The outer arm support portion 60a and the notch portion 60b are adjacent to each other in the circumferential direction, the outer arm support portion 60a overlaps the outer end 46b of the arm portion 46, and the notch portion 60b of the outer spacer 60 overlaps the notch portion 44a of the outer fixation portion 44. The outer spacer 60 does not overlap other parts of the arm portion 46, nor does it overlap the inner fixation portion 42 of the leaf spring 40. The outer spacer 60 is provided with a large number of circular small holes for fastening in the circumferential direction, fastening members such as a bolt are inserted therein, and the outer spacer 60 is fastened together with the outer fixation portion 44 and is fixed to the support body.

As illustrated in Fig. 5, the inner spacer 50 defines a first boundary line 70 between the arm portion 46 and the inner fixation portion 42 on the leaf spring 40. The inner arm support portion 50a defines the first boundary line 70 on the arm portion 46. The outer spacer 60 defines a second boundary line 72 between the arm portion 46 and the outer fixation portion 44 on the leaf spring 40. The outer arm support portion 60a defines the second boundary line 72 on the arm portion 46. The first boundary line 70 and the second boundary line 72 extend in a tapered shape to approach each other from the inside toward the outside (that is, from the inner arm line 47 toward the outer arm line 48). This configuration also helps alleviating stress concentration at both ends of the arm portion 46 compared to a case where the boundary lines are parallel to each other or a case where the boundary lines are in a reversely tapered shape separating from each other from the inside toward the outside.

As illustrated in Fig. 6, the flexure bearing 38 includes the plurality of (for example, five to ten) leaf springs 40, which are laminated and disposed in the axial direction, which is the oscillating direction. Since the inner spacer 50 and the outer spacer 60 are sandwiched between the two leaf springs 40, the two adjacent leaf springs 40 are arrayed at an interval in the axial direction to a degree that the adjacent leaf springs are not in contact with each other. When the oscillating body oscillates in the axial direction, the inner fixation portion 42 moves with respect to the outer fixation portion 44 as shown with a broken line arrow 74 together with the oscillating body, and the arm portion 46 elastically de forms. That is, the elastic deformation of the arm portion 46 allows the axial oscillation of the oscillating body with respect to the support body.

Fig. 7 is a plan view schematically illustrating a spiral type leaf spring 80 used in a flexure bearing of the related art. The spiral type leaf spring 80 has a plurality of spring portions 82 extending in a spiral shape. As described above, such a leaf spring structure has advantages in which the spring length can be made large, the stroke of a movable member can be made long, and resistance to repeated fatigue fracture can be improved. However, as the length of the spring portion 82 increases, the stiffness in the horizontal direction (that is, the direction perpendicular to the oscillating direction) decreases, and the movable member is likely to be displaced in the horizontal direction or to be inclined in the oscillating direction. Accordingly, the repeated contact or collision of the movable member with a fixing member can affect the long-term reliability of the compressor.

In particular, for example, in a case where the cryocooler is mounted on a spacecraft such as an artificial satellite, when the flexure bearing is damaged in the cryocooler during the operation of the spacecraft, restoring the function by repairing or replacing the flexure bearing is practically difficult or impossible. Thus, securing the long-term reliability is important for the cryocooler for a spacecraft. In addition, it is desired that cryocoolers for other purposes continue to operate stably for a long period of time.

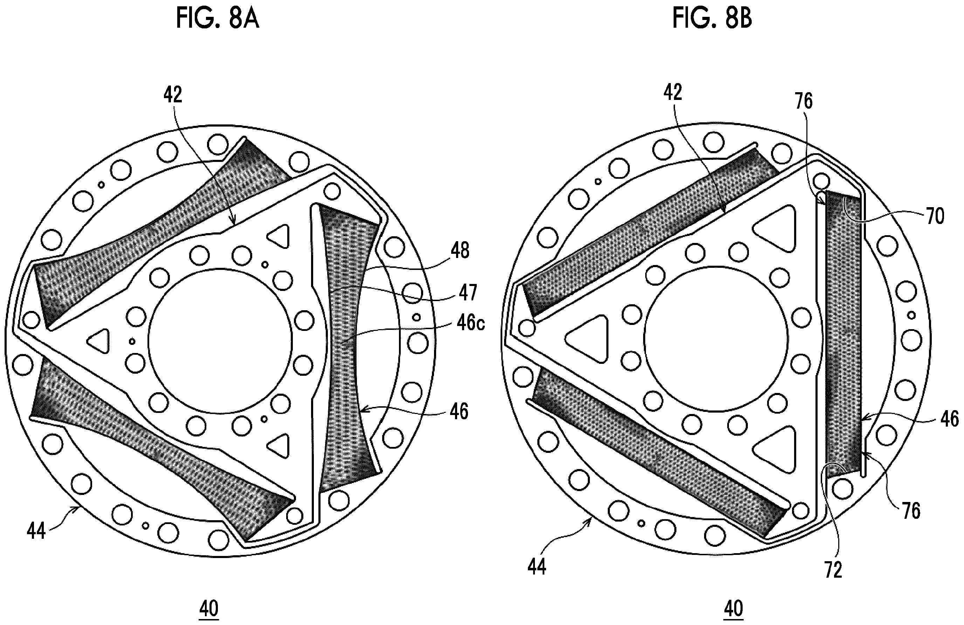

Figs. 8A and 8B illustrate calculation results of stress acting on the arm portion 46 due to the oscillation of the leaf spring 40 according to the embodiment. Fig. 8A illustrates the calculation results of the von Mises stress of the arm portion 46 of the leaf spring 40 described with reference to Figs. 2 to 6, the arm portion 46 of the leaf spring 40 has the inner arm line 47 and the outer arm line 48 which are curved to approach each other at the intermediate portion 46c of the arm portion 46, and the outer arm line 48 is strongly curved compared to the inner arm line 47. For comparison, Fig. 8B illustrates the calculation results of the von Mises stress of the leaf spring 40 having the arm portion 46 whose inner and outer arm lines are both straight lines.

In Figs. 8A and 8B, the magnitude of the von Mises stress is shown by the shade of gray. Light gray indicates low stress, and dark gray indicates high stress.

While a maximum value of the vonMises stress in the straight arm line type arm portion 46 of Fig. 8B is calculated to be approximately 596 MPa, a maximum value of the von Mises stress in the bilaterally curved arm line type arm portion 46 of Fig. 8A is calculated to be approximately 394 MPa. The maximum stress is reduced in the arm portion 46 of Fig. 8A compared to the arm portion of Fig. 8B.

Referring to Fig. 8B, in the arm portion 46, a relatively dark-colored region (that is, a region having high stress) 76 is found on an inner arm line side near the inner fixation portion 42 and on an outer arm line side near the outer fixation portion 44. On the other hand, referring to Fig. 8A, the arm portion 46 has a uniform gray color as a whole. As described above, the stress concentration is alleviated in the arm portion 46 of Fig. 8A compared to the arm portion 46 of Fig. 8B.

In addition, while the spring constant of the leaf spring 40 in the radial direction of Fig. 8B is calculated to be 0.976 x 10⁶ N/mm, the spring constant of the leaf spring 40 in the radial direction of Fig. 8A is calculated to be 1.22 x 10⁶ N/mm. As described above, in the leaf spring 40 of Fig. 8A, both ends of the arm portion 46 are thick by having the bilaterally curved arm line type arm portion 46, and has enhanced stiffness in the horizontal direction compared to the leaf spring having the straight arm line type arm portion 46 of Fig. 8B. The spring constant in the axial direction is calculated to be 1,259 N/mm for the leaf spring of Fig. 8B, and is calculated to be 1,128 N/mm for the leaf spring of Fig. 8A. As described above, the spring constant in the axial direction does not change significantly depending on an arm line shape, and both of the leaf springs 40 of Figs. 8A and 8B can provide substantially the same oscillation characteristics in the axial direction.

Compared to the spiral type leaf spring 80 illustrated in Fig. 7, the leaf springs 40, in which the linearly extending arm portions 46 shown in Figs. 8A and 8B are disposed in a regular triangular shape, can provide significantly high stiffness in the horizontal direction. Accordingly, it can be suppressed that the oscillating body attached to the leaf spring 40 is displaced in the horizontal direction or is inclined with respect to the oscillating direction during oscillation. The oscillating body oscillates linearly in the axial direction with respect to the support body, and avoids contact or collision with the support body. In addition, in the arm portions 46 of the leaf springs 40 of Figs. 8A and 8B, in particular, the leaf spring 40 of Fig. 8A, stress concentration caused by twist that can occur at both ends of the arm portion 46 when the leaf spring 40 is elastically deformed by the oscillation of the oscillating body can be alleviated. In this manner, the long-term reliability of the flexure bearing 38 is improved by alleviating stress concentration caused by twist while maintaining stiffness in the horizontal direction.

Even in a case where the arm line of the arm portion 46 is a straight line as illustrated in Fig. 8B, the first boundary line 70 and the second boundary line 72 extend in a tapered shape to approach each other from the inside toward the outside. As described above, this configuration also helps alleviating stress concentration at both ends of the arm portion 46 compared to a case where the boundary lines are parallel to each other or a case where the boundary lines are in a reversely tapered shape separating from each other from the inside toward the outside.

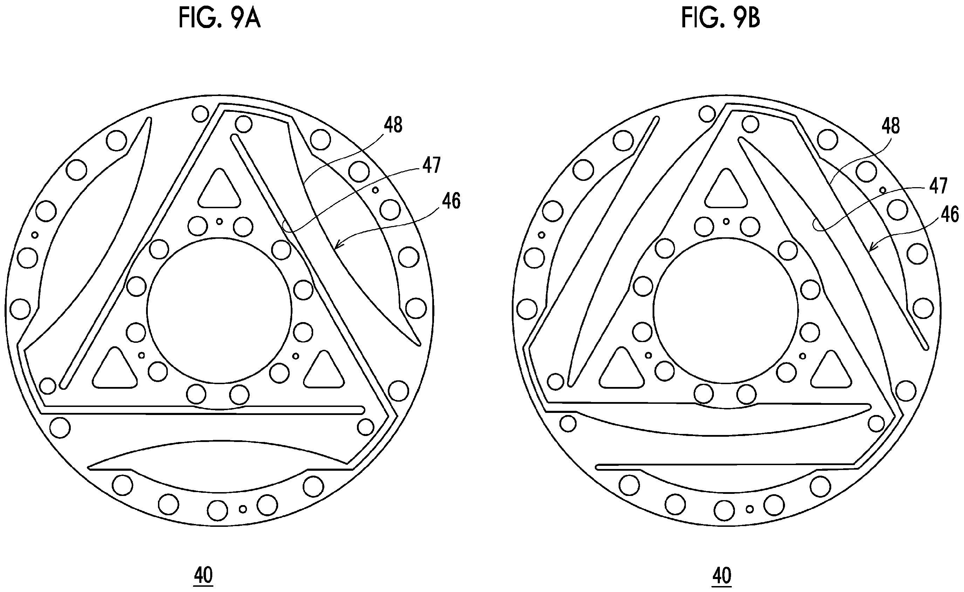

Figs. 9A and 9B illustrate modification examples of the leaf spring 40 according to the embodiment. In the modification examples, arm line shapes are different from the embodiment described above. In the leaf spring 40 illustrated in Fig. 9A, while the outer arm line 48 of the arm portion 46 is curved inward in a recessed shape, the inner arm line 47 is a straight line. On the contrary, in the leaf spring 40 illustrated in Figs. 9B, while the inner arm line 47 is curved outward in a recessed shape, the outer arm line 48 is a straight line.

Even in this manner, similar to the embodiment described above, stress concentration caused by twist can be alleviated while maintaining stiffness in the horizontal direction, and thereby the long-term reliability of the flexure bearing 38 is improved.

When the maximum values of the von Mises stress in the arm portion 46 are compared with each other, the values decrease in the order of Fig. 8B, Fig. 9B, Fig. 9A, and Fig. 8A. Therefore, in order to reduce stress, it is effective to curve the outer arm line 48 inward in a recessed shape. In addition, in a case where both of the inner arm line 47 and the outer arm line 48 are curved, it is effective to curve the outer arm line 48 more strongly.

The present invention has been described hereinbefore based on the examples. It is understood by those skilled in the art that the present invention is not limited to the embodiment described above. Various design changes are possible, various modification examples are possible, and such modification examples are also within the scope of the present invention. Various characteristics described in relation to one embodiment are also applicable to other embodiments. A new embodiment generated by combination has effects of the respective combined embodiments.

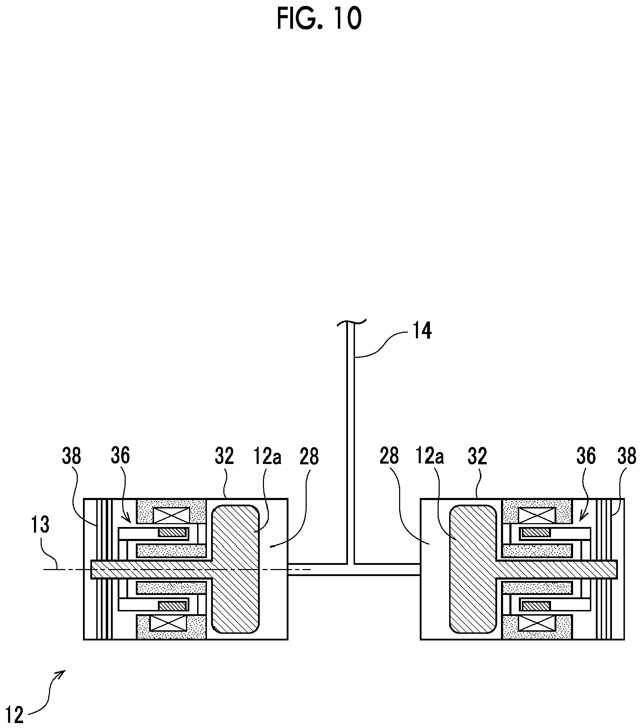

Although an example in which a case where the linear compressor 12 is a movable cylinder type has been described in the embodiment described above, the linear compressor 12 may be a movable piston type. Fig. 10 is a view schematically illustrating another example of the linear compressor 12 to which the flexure bearing 38 according to the embodiment can be applied.

As illustrated in Fig. 10, the linear compressor 12 is configured as a so-called facing two-cylinder type linear compressor including two compressor units that are disposed coaxially to face each other. Each compressor unit includes a piston 12a that extends in the axial direction, the linear actuator 36 that drives the piston 12a in the axial direction, and the housing 32 that accommodates the piston 12a and the linear actuator 36 and supports the piston 12a to be oscillatable in the axial direction. In Fig. 10, the axial direction corresponds to an up-and-down direction. A center axis 13 of the piston 12a is illustrated.

The piston 12a is elastically supported by the housing 32 via the flexure bearing 38 such that displacement in the axial direction can be caused while displacement in the radial direction and the circumferential direction is restricted. In addition, the housing 32 supports the linear actuator 36 in a fixed manner. The compression space 28 is formed between the housing 32 and the piston 12a. One end of the connecting pipe 14 is connected to the compression space 28. The piston 12a oscillates in the axial direction by the driving of the linear actuator 36. Accordingly, the volume of the compression space 28 increases and decreases due to oscillation, and pressure oscillation of the refrigerant gas in the compression space 28 is generated.

Although a case where the inner fixation portion 42 of the leaf spring 40 is fixed to the oscillating body and the outer fixation portion 44 of the leaf spring 40 is fixed to the support body has been described as an example in the embodiment described above, conversely, it is also possible that the inner fixation portion 42 of the leaf spring 40 is fixed to the support body and the outer fixation portion 44 of the leaf spring 40 is fixed to the oscillating body.

Although a case where one leaf spring 40 is provided with three arm portions 46 has been described in the embodiment described above, one leaf spring may have four or more arm portions. Similar to the embodiment described above, the inner fixation portion of the leaf spring may have a regular polygonal shape, and the arm portion may be disposed in a regular polygonal shape to surround the inner fixation portion. That is, one end of each arm portion may be connected to the corresponding apex of the inner fixation portion, and the arm portion may extend toward the adjacent apex along the corresponding side of the inner fixation portion.

The flexure bearing according to the embodiment can be applied not only to a Stirling-type pulse tube cryocooler but also to other pulse tube cryocoolers such as a GM type pulse tube cryocooler or to other cryocoolers such as a Stirling cryocooler and a GM cryocooler.

Although a case where the flexure bearing 38 is mounted on the linear compressor 12 has been described as an example in the embodiment described above, the flexure bearing according to the embodiment may be mounted on the expander of the cryocooler . For example, the flexure bearing may be used in a Stirling cryocooler in order to connect a displacer which is an oscillating body to the support body.

Although the present invention has been described using specific phrases based on the embodiment, the embodiment merely shows one aspect of the principles and applications of the present invention, and many modification examples and changes in disposition are allowed without departing from the gist of the present invention defined in the claims.

### Brief Description of the Reference Symbols

- 10: cryocooler
- 12: linear compressor
- 28: compression space
- 30: cylinder
- 32: housing
- 34: piston
- 38: flexure bearing
- 40: leaf spring
- 42: inner fixation portion
- 44: outer fixation portion
- 44a: notch portion
- 46: arm portion
- 46c: intermediate portion
- 47: inner arm line
- 48: outer arm line
- 50: inner spacer
- 60: outer spacer
- 70: first boundary line
- 72: second boundary line

## Claims

1. A cryocooler (10) comprising:
an oscillating body;
a support body;
a drive source (36) that oscillates the oscillating body in an oscillating direction with respect to the support body; and
a flexure bearing (38) that includes at least one leaf spring (40), which is disposed in a plane perpendicular to the oscillating direction and connects the oscillating body to the support body,
wherein the leaf spring (40) includes
an inner fixation portion (42) that is fixed to one of the oscillating body and the support body,
an outer fixation portion (44) that is fixed to the other one of the oscillating body and the support body, and
an arm portion (46) that connects the inner fixation portion (42) and the outer fixation portion (44) to each other, linearly extends in an arm longitudinal direction intersecting a radial direction of the leaf spring (40) in the plane, and has an arm width in a direction perpendicular to the arm longitudinal direction in the plane, which increases from an intermediate portion (46c) of the arm portion (46) toward each of the inner fixation portion (42) and the outer fixation portion (44) .

2. The cryocooler (10) according to claim 1,
wherein the arm portion (46) includes an inner arm line (47) and an outer arm line (48), which extend from the inner fixation portion (42) to the outer fixation portion (44) and define the arm width, and
the inner arm line (47) is curved outward in a recessed shape and/or the outer arm line (48) is curved inward in a recessed shape.

3. The cryocooler (10) according to claim 2,
wherein the outer arm line (48) is strongly curved compared to the inner arm line (47).

4. The cryocooler (10) according to any one of claims 1 to 3,
wherein the flexure bearing (38) includes
an inner spacer (50) that is disposed to overlap the inner fixation portion (42) and defines a first boundary line (70) between the arm portion (46) and the inner fixation portion (42) on the leaf spring (40), and
an outer spacer (60) that is disposed to overlap the outer fixation portion (44) and defines a second boundary line (72) between the arm portion (46) and the outer fixation portion (44) on the leaf spring (40), and
the first boundary line (70) and the second boundary line (72) extend in a tapered shape to approach each other from an inside to an outside.

5. The cryocooler (10) according to any one of claims 1 to 4,
wherein a notch portion (44a) that receives an end portion of the arm portion (46), which is connected to the inner fixation portion (42), is formed in the outer fixation portion (44).

6. The cryocooler (10) according to any one of claims 1 to 5,
wherein the leaf spring (40) includes three arm portions (46) disposed in a regular triangular shape, and
the arm width of each of the three armportions (46) increases from the intermediate portion (46c) of the arm portion (46) toward each of the inner fixation portion (42) and the outer fixation portion (44).

7. The cryocooler (10) according to any one of claims 1 to 6,
wherein the oscillating body includes one of a piston (31, 12a) and a cylinder (30),
the support body includes the other one of the piston (31, 12a) and the cylinder (30),
a compression space (28) for a refrigerant gas is formed between the piston (31, 12a) and the cylinder (30), and
the cryocooler (10) is configured to generate pressure oscillation of the refrigerant gas in the compression space (28) by driving of the drive source (36).

8. A flexure bearing (38) mounted on a cryocooler (10), the flexure bearing (38) comprising:
at least one leaf spring (40) that is disposed in a plane perpendicular to an oscillating direction of an oscillating body and connects the oscillating body to the support body,
wherein the leaf spring (40) includes
an inner fixation portion (42) that is fixed to one of the oscillating body and the support body,
an outer fixation portion (44) that is fixed to the other one of the oscillating body and the support body, and
an arm portion (46) that connects the inner fixation portion (42) and the outer fixation portion (44) to each other, linearly extends in an arm longitudinal direction intersecting a radial direction of the leaf spring (40) in the plane, and has an arm width in a direction perpendicular to the arm longitudinal direction in the plane, which increases from an intermediate portion (46c) of the arm portion (46) toward each of the inner fixation portion (42) and the outer fixation portion (44) .

9. A flexure bearing (38) mounted on a cryocooler (10), the flexure bearing (38) comprising:
at least one leaf spring (40) that is disposed in a plane perpendicular to an oscillating direction of an oscillating body and connects the oscillating body to the support body,
wherein the leaf spring (40) includes
an inner fixation portion (42) that is fixed to one of the oscillating body and the support body,
an outer fixation portion (44) that is fixed to the other one of the oscillating body and the support body, and
an arm portion (46) that connects the inner fixation portion (42) and the outer fixation portion (44) to each other and linearly extends in an arm longitudinal direction intersecting a radial direction of the leaf spring (40) in the plane,
the flexure bearing (38) further comprises
an inner spacer (50) that is disposed to overlap the inner fixation portion (42) and defines a first boundary line (70) between the arm portion (46) and the inner fixation portion (42) on the leaf spring (40); and
an outer spacer (60) that is disposed to overlap the outer fixation portion (44) and defines a second boundary line (72) between the arm portion (46) and the outer fixation portion (44) on the leaf spring (40), and
the first boundary line (70) and the second boundary line (72) extend in a tapered shape to approach each other from an inside to an outside.

10. A linear compressor (12) for a cryocooler (10) comprising the flexure bearing (38) according to claim 8 or 9.
